(19) **Europäisches Patentamt / European Patent Office / Office européen des brevets**

(11) **EP 1 112 872 B1**

(12) **FASCICULE DE BREVET EUROPEEN**

(45) Date de publication et mention de la délivrance du brevet:
**23.05.2007 Bulletin 2007/21**

(51) Int Cl.:
**B60H 1/32** (2006.01)

(21) Numéro de dépôt: **00127239.2**

(22) Date de dépôt: **15.12.2000**

(54) **Dispositif de climatisation d'un habitacle de véhicule automobile, à commande de ventilation perfectionné**

Klimaanlage für ein Kraftfahrzeug mit einer optimierten Ventilationssteuerung

Airconditioning unit for a vehicle with optimised ventilation control

(84) Etats contractants désignés:
**DE ES GB IT**

(30) Priorité: **20.12.1999 FR 9916081**

(43) Date de publication de la demande:
**04.07.2001 Bulletin 2001/27**

(73) Titulaire: **VALEO SYSTEMES THERMIQUES**
**78321 Le Mesnil St Denis Cedex (FR)**

(72) Inventeurs:
• **Hamery, Bruno**
  **75005 Paris (FR)**
• **Liu, Jin Ming**
  **78700 Conflans S/Honorine (FR)**

(74) Mandataire: **Gérard, Michel**
  **Valéo Climatisation,**
  **8, rue Louis-Lormand**
  **78321 La Verrière (FR)**

(56) Documents cités:
| | |
|---|---|
| **EP-A- 0 444 537** | **DE-A- 19 713 197** |
| **DE-A- 19 743 828** | **US-A- 4 425 766** |
| **US-A- 4 469 053** | |

**Description**

L'invention concerne un dispositif de climatisation d'un habitacle de véhicule automobile.

Un dispositif de ce type comporte, de façon habituelle, une boucle de climatisation munie d'un évaporateur, d'un compresseur, d'un condenseur et d'un détendeur, parcourus par un fluide frigorigène. Généralement, un groupe moto-ventilateur est propre à produire un flux d'air pour refroidir le moteur du véhicule. Ce flux d'air traverse en outre le condenseur pour le refroidir.

En pratique, le groupe moto-ventilateur est alimenté électriquement par l'intermédiaire d'un module de commande pour faire varier son régime et, de là, le débit d'air traversant le condenseur.

La puissance frigorifique de la boucle de climatisation peut ainsi être définie, d'une part, par l'écart entre une haute pression du fluide frigorigène en sortie du compresseur et une basse pression du fluide en entrée du compresseur, et, d'autre part, par la quantité d'air qui traverse le condenseur.

Généralement, un passager de l'habitacle émet par un organe de commande une consigne relative à une puissance frigorifique souhaitée dans l'habitacle. Typiquement, s'il est souhaité une augmentation de cette puissance frigorifique, il s'ensuit une augmentation de l'écart entre les haute et basse pressions précitées et une augmentation du régime du groupe moto-ventilateur.

Un tel dispositif est connu par exemple du document DE 19743828, qui est considéré comme l'état de l'art le plus proche.

Cependant, si le condenseur est suffisamment ventilé, notamment par une grande vitesse du véhicule ou par un vent incident sur le véhicule, il n'est pas nécessaire de déclencher ou d'augmenter le régime du groupe moto-ventilateur.

Or, dans les dispositifs de climatisation du type précité, connus, une commande de l'augmentation de la puissance frigorifique de la boucle entraîne systématiquement une augmentation, au moins par paliers, du régime du groupe moto-ventilateur et de son alimentation électrique. Il advient, notamment lorsque le véhicule roule à grande vitesse, un déclenchement inutile ou une augmentation de régime intempestive du groupe moto-ventilateur, ce qui entraîne une usure plus rapide de ce dernier et une puissance d'alimentation électrique gaspillée.

La présente invention vient améliorer la situation.

Elle propose à cet effet un dispositif de climatisation du type décrit ci-avant, mais dans lequel il est prévu des moyens pour relever un paramètre représentatif d'un débit d'air traversant le condenseur, ce débit d'air comprenant ou non un débit d'air produit par le groupe moto-ventilateur. Le dispositif selon l'invention comprend un module de régulation, propre à coopérer avec les moyens précités et capable d'estimer, pour un débit d'air donné, une valeur maximale en alimentation électrique du groupe moto-ventilateur. Le module de régulation peut alors coopérer avec le module de commande, en vue de limiter l'alimentation électrique du groupe moto-ventilateur sensiblement à cette valeur maximale, en fonction du débit d'air.

Ainsi, on limite l'alimentation électrique du groupe moto-ventilateur à une valeur maximale, estimée en fonction du débit d'air traversant le condenseur. Cet air peut provenir, au moins en partie, du flux que produit le groupe moto-ventilateur et/ou de la vitesse du véhicule et/ou d'un vent incident sur le véhicule. On estime ainsi que, selon la vitesse du véhicule et, plus précisément, selon le différentiel de vitesses entre la vitesse du véhicule et celle du vent, il n'est plus nécessaire d'augmenter le débit d'air traversant le condenseur par une augmentation de la puissance du groupe moto-ventilateur au delà d'une valeur maximale, même si une augmentation de la puissance frigorifique de la boucle est souhaitée. En revanche, la valeur de la haute pression en sortie du compresseur peut encore augmenter en proportion de la puissance frigorifique souhaitée.

Néanmoins, pour des raisons de sécurité, cette valeur de haute pression ne doit pas dépasser non plus une valeur maximale fixée par les constructeurs. Par ailleurs, le moteur du véhicule reste prioritaire pour le choix du fonctionnement du groupe moto-ventilateur. En pratique, il est prévu un capteur de température du moteur relié au module de commande du groupe moto-ventilateur pour son déclenchement et/ou sa variation de régime. Ainsi, si le moteur nécessite un déclenchement ou une augmentation de régime du groupe moto-ventilateur, ce déclenchement ou cette augmentation de régime est effective même si l'alimentation du groupe a atteint la valeur maximale estimée par le module de régulation du dispositif de climatisation selon l'invention.

Avantageusement, le module de régulation est connecté à un capteur de vitesse du véhicule, et tient compte de la vitesse du véhicule pour évaluer la valeur maximale d'alimentation électrique du groupe moto-ventilateur.

Dans une forme de réalisation plus élaborée, le module de régulation est connecté à un capteur anémomètre agencé pour relever une vitesse d'air incidente sur le véhicule, proportionnelle à un débit d'air traversant le condenseur et non produit par le groupe moto-ventilateur. Le module de régulation tient alors compte de la vitesse du véhicule et d'un vent incident sur le véhicule pour évaluer la valeur maximale précitée d'alimentation électrique du groupe moto-ventilateur.

Selon une autre caractéristique avantageuse de l'invention, le module de régulation est agencé en outre pour estimer la valeur maximale en alimentation électrique du groupe moto-ventilateur, pour une puissance frigorifique donnée de la boucle de climatisation qui correspond à une valeur prédéterminée de haute pression du fluide frigorigène en sortie du compresseur.

Il est avantageusement prévu des moyens pour relever un paramètre représentatif d'une haute pression du fluide frigorigène en sortie du compresseur.

De façon particulièrement avantageuse, le module de régulation est capable d'évaluer en outre, pour un débit d'air donné, une valeur en alimentation électrique du groupe moto-ventilateur, inférieure à la valeur maximale précitée, en fonction d'une diminution de haute pression vers des valeurs de hautes pressions inférieures à la valeur prédéterminée de la haute pression. Le module de régulation est alors agencé pour coopérer avec le module de commande en vue d'ajuster l'alimentation électrique du groupe moto-ventilateur, à une valeur en correspondance avec une valeur de haute pression, inférieure à la valeur prédéterminée de haute pression.

Ainsi, pour une puissance frigorifique donnée, l'alimentation électrique du groupe moto-ventilateur est limitée à une valeur maximale qui est estimée en fonction d'un débit d'air incident sur le condenseur.

Préférentiellement, le module de régulation est agencé pour évaluer la correspondance entre la valeur en alimentation électrique du groupe moto-ventilateur et une valeur de haute pression inférieure à la valeur prédéterminée de haute pression, selon un modèle choisi de variation sensiblement quadratique réciproque.

Dans une forme de réalisation élaborée, le dispositif comporte des moyens pour relever un paramètre représentatif d'une basse pression du fluide en entrée du compresseur. Le module de régulation est alors agencé pour évaluer la correspondance de la valeur d'alimentation avec la diminution de la haute pression, en fonction de cette basse pression du fluide.

Préférentiellement, le compresseur est du type "à contrôle externe" et le module de régulation est connecté à un capteur de courant électrique d'alimentation du compresseur, ce courant électrique étant représentatif de la basse pression de fluide en entrée du compresseur.

Dans une variante selon laquelle le compresseur est du type "à contrôle interne", le module de régulation est connecté à un capteur de température du flux d'air en sortie de l'évaporateur, cette température étant représentative de la basse pression de fluide en entrée du compresseur.

D'autres caractéristiques et avantages de l'invention apparaîtront à l'examen de la description détaillée ci-après, et des dessins annexés sur lesquels :

- la figure 1 est une vue schématique de la boucle de climatisation du dispositif selon l'invention, le condenseur de la boucle étant traversé par un débit d'air que produit au moins en partie un groupe moto-ventilateur ;

- la figure 2 représente l'allure de la basse pression en entrée d'un compresseur à contrôle externe d'un dispositif selon l'invention, en fonction d'un courant électrique de commande d'une vanne du compresseur ;

- la figure 3 représente l'allure d'une tension d'alimentation électrique du groupe moto-ventilateur en fonction de la haute pression à la sortie du compresseur, cette tension étant ajustée par le module de régulation du dispositif selon l'invention ;

- la figure 4 représente l'allure d'une tension optimale d'alimentation du groupe moto-ventilateur, en fonction de la vitesse du véhicule ; et

- la figure 5 représente l'allure d'un coefficient de performance globale de la boucle de climatisation et du groupe moto-ventilateur, à vitesse de véhicule et puissance frigorifique sensiblement constantes, en fonction de la tension d'alimentation du groupe moto-ventilateur.

Les dessins contiennent, pour l'essentiel, des éléments de caractère certain. Ils pourront donc non seulement servir à mieux faire comprendre la description, mais aussi contribuer à la définition de l'invention, le cas échéant.

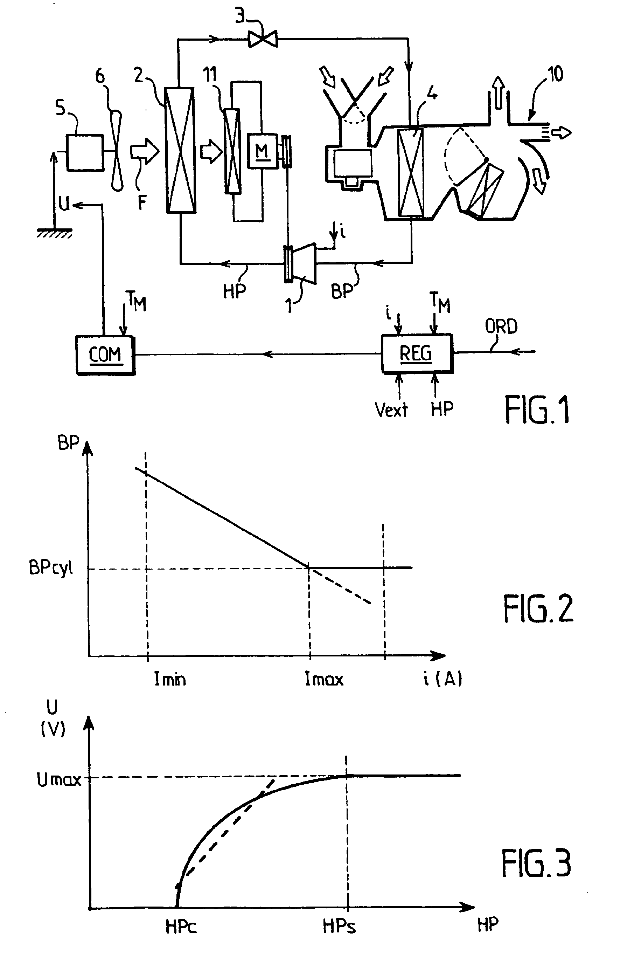

On se réfère tout d'abord à la figure 1 pour décrire un dispositif de climatisation, muni d'un module de régulation REG du régime d'un groupe moto-ventilateur, selon l'invention.

Le dispositif comprend une boucle de climatisation munie d'un compresseur 1, d'un condenseur 2, d'un détendeur 3 et d'un évaporateur 4. Cette boucle de climatisation est parcourue par un fluide frigorigène (fréon ou autre). En sortie de l'évaporateur 4, le fluide est sous forme principale gazeuse de basse pression BP. Dans le compresseur 1, sa pression augmente jusqu'à une valeur de haute pression HP. En traversant le condenseur 2, le fluide passe principalement de l'état gazeux à l'état liquide, à haute pression HP. Le fluide, principalement à l'état liquide est ensuite détendu en 3 à la basse pression BP.

Un groupe moto-ventilateur, alimenté électriquement en tension U, comprend un moteur 5 propre à entraîner en rotation une hélice 6. La rotation des pales de cette hélice 6 produit un flux d'air F, traversant un radiateur de refroidissement 11 du moteur M du véhicule automobile. Ce flux d'air F traverse en outre le condenseur 2. En entrée du condenseur 2, le fluide frigorigène est principalement sous forme gazeuse, de haute pression HP. Dans le condenseur, il passe de l'état gazeux à l'état liquide. Le condenseur cède de sa chaleur au flux F pour permettre ce changement de phase du fluide frigorigène.

En revanche, à l'entrée de l'évaporateur 4, le fluide frigorigène est principalement sous forme liquide, de basse pression BP. Dans l'évaporateur, il passe de l'état liquide à l'état gazeux. En pratique, de l'air délivré dans un appareil 10 de ventilation, chauffage et climatisation, en traversant l'évaporateur 4, cède de sa chaleur pour permettre le passage du fluide frigorigène à l'état gazeux. Cet air, ainsi refroidi, peut être ensuite ventilé dans l'habitacle du véhicule (non représenté), en vue de sa climatisation.

Dans l'exemple décrit, le compresseur 1 est de type "à contrôle externe". C'est ainsi qu'il comporte une vanne électronique dont le fonctionnement est commandé de l'extérieur par un courant de commande i. En se référant à la figure 2, une augmentation en intensité de ce courant de commande i se traduit par une diminution de la basse pression du fluide frigorigène dans la branche de la boucle de climatisation, délimitée par le détendeur et le compresseur, côté évaporateur 4. En pratique, le courant de commande i varie entre deux limites Imin et Imax, entre lesquelles la basse pression BP en entrée du compresseur 1 diminue jusqu'à une valeur BPcyl, cette valeur minimale de la basse pression correspondant à une cylindrée maximale atteinte par le compresseur 1.

En pratique, la tension d'alimentation U du moteur 5 du groupe moto-ventilateur est ajustée par un module de commande COM. Ainsi, ce module de commande est propre à recevoir des consignes et ajuster la valeur de la tension d'alimentation U, en fonction de ces consignes. Une variation de la tension d'alimentation U se traduit finalement par une variation du régime du groupe moto-ventilateur et, de là, une variation du débit d'air qu'il produit. En pratique, un capteur de la température $T_M$ du moteur M est connecté au module COM pour que le groupe moto-ventilateur se déclenche ou encore pour augmenter son régime, en cas de surchauffe du moteur. A l'inverse, lorsque la température du moteur $T_M$ devient inférieure à une valeur seuil choisie, le module COM diminue le régime du groupe moto-ventilateur ou interrompt son fonctionnement.

Dans le dispositif de climatisation selon l'invention, le module COM reçoit en outre une consigne d'un module de régulation REG. Le module de régulation REG reçoit initialement une consigne ORD, typiquement d'un organe de commande à disposition d'un passager dans l'habitacle, relative à une puissance frigorifique souhaitée pour la boucle de climatisation et correspondant à une configuration aérothermique de climatisation souhaitée dans l'habitacle. Un module de commande du courant électrique i (non représenté) reçoit cette consigne ORD et ajuste ainsi la valeur de l'intensité du courant de commande i de la vanne du compresseur. En particulier, s'il est souhaité une augmentation de la puissance frigorifique de la boucle, l'intensité i du courant de commande augmente et l'écart entre la basse pression BP et la haute pression HP augmente en conséquence.

Dans les dispositifs de climatisation connus, une augmentation de la puissance frigorifique souhaitée se traduit aussi par une augmentation systématique, au moins par palier, du régime du groupe moto-ventilateur, en vue d'accroître le débit d'air qu'il délivre et qui traverse le condenseur 2 par la suite.

Dans le dispositif de climatisation selon l'invention, le module de régulation REG tient compte d'une vitesse d'air extérieur, incidente sur le véhicule. Le module de régulation ajuste donc la tension d'alimentation U du groupe moto-ventilateur, en coopérant avec le module de commande COM du groupe moto-ventilateur. Plus particulièrement, le module de régulation du dispositif selon l'invention limite la tension d'alimentation U du groupe moto-ventilateur, en fonction d'une vitesse d'air extérieur Vext. Cette vitesse d'air extérieur Vext peut être déduite de la vitesse du véhicule, mais aussi d'un vent incident sur le véhicule.

Le module REG estime donc une valeur maximale Umax (figure 3) de la tension d'alimentation, en fonction de cette vitesse d'air extérieure Vext, et pilote le module de commande COM pour ne pas dépasser la tension d'alimentation Umax.

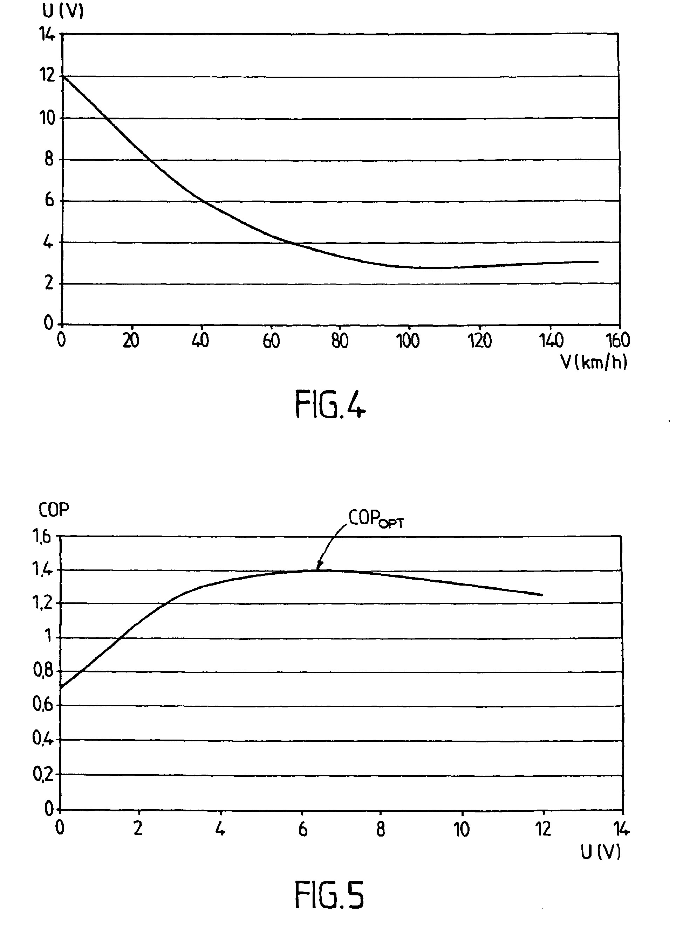

En se référant en effet à la figure 4, il apparaît que, pour une vitesse donnée du véhicule (non nulle), une tension d'alimentation supérieure est inutile. La Demanderesse a constaté que, pour une puissance frigorifique donnée, sensiblement constante, la tension d'alimentation U nécessaire au groupe moto-ventilateur pour entretenir la puissance frigorifique précitée, décroissait en fonction de la vitesse du véhicule (figure 4). C'est ainsi que le module de régulation REG du dispositif selon l'invention estime une tension d'alimentation optimale (maximale), notamment en fonction de la vitesse du véhicule. Typiquement, pour une puissance frigorifique donnée, la tension d'alimentation U du groupe moto-ventilateur, nécessaire pour conserver cette puissance frigorifique, passe de 12 volts lorsque le véhicule est au ralenti à une tension qui se stabilise à environ 3 volts lorsque la vitesse du véhicule dépasse 100 k/h.

En pratique, il est prévu une connexion du module de régulation à un capteur de vitesse du véhicule automobile (par exemple au compteur kilométrique du tableau de bord ou autre). Le module REG évalue ainsi une correspondance entre la vitesse du véhicule et la vitesse d'air que reçoit le condenseur 2. Dans une forme de réalisation plus élaborée, il peut en outre être prévu un capteur anémomètre pour mesurer une vitesse d'air que dirige un vent incident sur le véhicule.

Dans ce qui suit, on cherche à optimiser un coefficient de performance de la boucle de climatisation, noté COP, pour une puissance frigorifique Pf donnée, en fonction de la puissance mécanique du groupe moto-ventilateur, notée P5, et de la puissance mécanique du compresseur, notée P1. Ce coefficient de performance peut être déduit de la

relation :

$$COP = Pf/(P1+P5)$$

En général, la relation entre la tension U du groupe moto-ventilateur et l'intensité d'un courant électrique I qui circule entre ses bornes peut s'exprimer par :

$$U=|Z|*I+k \ ,$$

où k est une constante et Z son impédance.

En estimant le rendement de l'alternateur du groupe moto-ventilateur à une valeur voisine de 50 %, la puissance P5 du groupe moto-ventilateur s'évalue par :

$$P5 = 2 * U(U-k)/|Z|$$

La puissance P1 du compresseur peut être classiquement définie par :

$$P1 = a*\vartheta+b \ ,$$

où $\vartheta$ représente son taux de compression, a et b étant des paramètres propres au compresseur (en pratique, liés à sa vitesse de rotation).

Le coefficient de performance COP s'écrit donc :

$$COP = Pf/(a*\vartheta+b+2U(U-k)/|Z|)$$

A puissance frigorifique Pf sensiblement constante, il faut que le terme au dénominateur soit minimal pour que ce coefficient COP soit optimal. La relation suivante doit donc être vérifiée :

$$dP/d\vartheta = a+(2*(2U-k)/|Z|)*(dU/d\vartheta)=0$$

ou encore :

$$dU/d\vartheta = -a/(2*(2U-k)/|Z|)$$

Le taux de compression $\vartheta$ est fonction de la haute pression HP et de la basse pression BP, de sorte que, de façon classique :

$$d\vartheta = dHP * BP$$

Ainsi,

# EP 1 112 872 B1

$$dHP = [-2*BP*(2U-k)/(|Z|*a)]*dU$$

Il est à noter que le terme dHP/dU représente la variation (augmentation ou diminution) de la haute pression HP en fonction de la tension U. En outre, à partir d'un capteur propre à relever le courant de commande i du compresseur ou plus simplement à partir d'une connexion du module REG au module de commande du compresseur, le module de régulation déduit la valeur de la pression BP (figure 2).

Ainsi, le coefficient de performance COP est optimal lorsque le rapport des variations de haute pression HP et de tension d'alimentation U vaut, en première approximation :

$$|)HP/)U| = (2*BP*(2U-k)/|Z|)/a$$

En se référant à la figure 5, le coefficient de performance COP croît, puis décroît, en fonction de la tension aux bornes du groupe moto-ventilateur. Sa valeur optimale (maximale) COPopt est atteinte pour une valeur choisie de la tension d'alimentation U, correspondant à une valeur de la haute pression HP. Cependant, la valeur de la tension U reste inférieure à sa valeur maximale Umax qui, elle, est estimée en fonction de la vitesse d'air extérieur Vext, et ce, indépendamment de la valeur de la haute pression HP.

En revanche, une diminution de la vitesse du groupe moto-ventilateur reste permise, en particulier si la pression HP diminue. Dans ce qui suit, on propose un modèle de régulation de la tension U en fonction de la pression HP.

Pour conserver un coefficient de performance COP optimal, la tension U doit satisfaire la relation suivante en fonction de la pression HP :

$$HP = (U^2-k*U)*(2*BP)/(|Z|*a)+c$$

On note HPc la haute pression en sortie du compresseur lorsque ce dernier est en cylindrée maximale, avec un courant de commande i voisin de la valeur Imax. Concernant la commande du compresseur en cylindrée maximale, on cherche à minimiser la pression BP et plus particulièrement la pression HP, ainsi que son taux de compression. Ainsi, pour une haute pression HP inférieure à HPc, la tension d'alimentation du groupe moto-ventilateur est nulle et la constante c ci-dessus correspond à la pression HPc.

On en déduit alors la variation (figure 3) de la tension U en fonction de la pression HP, pour des valeurs de U inférieures à Umax :

$$U = 1/2 * [k+(k^2+2*a*(HP-HPc)*|Z|/BP)^{1/2}] \qquad (1)$$

Le module de régulation REG, selon une autre caractéristique avantageuse de l'invention, est alors agencé pour stabiliser la tension d'alimentation du groupe moto-ventilateur en fonction de la pression HP, pour des valeurs de tension U inférieures à la valeur Umax.

Cependant, si la valeur de la haute pression HP en sortie du compresseur 1 dépasse une valeur seuil HPs, la tension d'alimentation U reste constante, fixée à la valeur Umax.

Pour relever la valeur de la pression HP, il est prévu un capteur de pression en sortie du compresseur 1, dans la boucle de refroidissement (côté condenseur). Ce capteur est relié au module de régulation REG.

La régulation de la tension U d'alimentation du groupe moto-ventilateur, s'effectue comme suit :

- tout d'abord, le module de régulation évalue une tension maximale Umax en fonction de la vitesse d'air extérieur Vext ;

- si la pression HP est inférieure à la pression HPc, alors le module REG commande une tension U nulle ;

- si la pression HP est supérieure à la pression HPc, le module de régulation évalue selon l'équation (1), la valeur correspondante de U :

   - si cette valeur est supérieure ou égale à la valeur Umax, le module REG impose la tension Umax ;

- si cette valeur est inférieure la tension Umax, alors la tension à appliquer au groupe moto-ventilateur est celle qui correspond, selon l'équation (1), à la valeur de la haute pression mesurée par le capteur de pression précité.

En bref, le module de régulation reçoit une information relative à une vitesse d'air incidente sur le véhicule (à partir d'un capteur de vitesse ou autre). De cette information, il déduit une tension d'alimentation maximale Umax du groupe moto-ventilateur (figure 4).

Avantageusement, pour que le dispositif de climatisation opère avec un coefficient de performance optimal, le module REG régule la valeur de la tension à appliquer au groupe moto-ventilateur en fonction de la haute pression en sortie du compresseur. Le module REG reçoit ainsi une information relative à la pression HP, ainsi qu'une information relative à la pression BP (à partir du courant de commande i) et en déduit une valeur de la tension U. Si cette valeur est supérieure à la valeur maximale Umax, la tension à appliquer au groupe moto-ventilateur est Umax. Sinon, le module applique (par le module de commande COM) la tension U correspondant à la haute pression HP mesurée.

Bien entendu, l'invention n'est pas limitée à la forme de réalisation décrite précédemment à titre d'exemple, elle s'étend à d'autres variantes.

Ainsi, on comprendra que la régulation de la tension U en fonction de la haute pression HP, bien que particulièrement avantageuse, peut, dans une variante simplifiée, être supprimée. Dans ce cas, seule la régulation en fonction de la vitesse d'air extérieure Vext, déduite au moins de la vitesse du véhicule, peut être prévue pour fixer une valeur maximale Umax de la tension d'alimentation.

L'utilisation de la valeur du courant de commande i (figure 2) du compresseur pour évaluer la basse pression BP est décrite ci-avant à titre d'exemple. Dans une variante selon laquelle le compresseur est de type à "contrôle interne", il peut être prévu de disposer un capteur de température de l'air en sortie de l'évaporateur, cette température étant représentative de la basse pression BP. Dans une autre variante, il peut être prévu de disposer un capteur de pression directement en entrée du compresseur.

Dans une variante moins élaborée, il peut être prévu de fixer la valeur de la basse pression BP à une valeur moyenne et d'effectuer une régulation de la tension U en fonction de la pression HP, en fonction de cette valeur moyenne.

Selon l'équation (1), le module REG du dispositif selon l'invention peut effectuer, en variante d'une régulation en tension U, une régulation de l'intensité I (variation sensiblement linéaire représentée sur la figure 3) ou de la puissance P5 du groupe moto-ventilateur, en fonction de la haute pression HP.

Les modules de commande COM et de régulation REG peuvent, dans une forme de réalisation pratique de l'invention, être regroupés en un même élément de commande, par exemple dans un boîtier électronique commun.

Bien entendu, les différentes valeurs numériques qui apparaissent notamment sur les figures 4 et 5 sont données ici à titre d'exemple, pour des boucles de climatisation et de groupes moto-ventilateurs particuliers.

## Revendications

1. Dispositif de climatisation d'un habitacle de véhicule automobile, du type comprenant une boucle de climatisation parcourue par un fluide frigorigène et comprenant notamment un compresseur (1) et un condenseur (2), ce condenseur (2) étant destiné à être traversé par un flux d'air (F) que produit au moins en partie un groupe moto-ventilateur (5,6) alimenté électriquement par l'intermédiaire d'un module de commande (COM), des moyens pour relever un paramètre (Vext) représentatif d'un débit d'air traversant le condenseur, ledit débit d'air comprenant ou non le débit d'air produit par le groupe moto-ventilateur,
**caractérisé en ce qu'**il comporte en outre :

   un module de régulation (REG), propre à coopérer avec lesdits moyens et capable d'estimer une valeur maximale (Umax) en alimentation électrique du groupe moto-ventilateur, pour un débit d'air donné et pour une puissance frigorifique donnée de la boucle de climatisation qui correspond à une valeur prédéterminée de haute pression (HPs) du fluide frigorigène en sortie du compresseur (1),
   et **en ce que** le module de régulation (REG) est agencé pour coopérer avec le module de commande (COM) pour limiter l'alimentation électrique du groupe moto-ventilateur sensiblement à ladite valeur maximale, en fonction du débit d'air et de la valeur de haute pression (HP) en sortie du compresseur (1).

2. Dispositif selon la revendication 1, **caractérisé en ce que** le module de régulation est propre à être relié à un capteur de vitesse du véhicule, et **en ce que** le module de régulation est apte à tenir compte de la vitesse du véhicule pour évaluer ladite valeur maximale (Umax) d'alimentation électrique du groupe moto-ventilateur.

3. Dispositif selon l'une des revendications précédentes, **caractérisé en ce que** le module de régulation est propre à être relié à un capteur anémomètre agencé pour relever une vitesse d'air incidente sur le véhicule, proportionnelle au débit d'air traversant le condenseur (2) et non produit par le groupe moto-ventilateur, et **en ce que** le module de régulation est apte à tenir compte d'un vent incident sur le véhicule et/ou d'une vitesse du véhicule pour évaluer ladite valeur maximale (Umax) d'alimentation électrique du groupe moto-ventilateur.

**4.** Dispositif selon l'une des revendications précédentes, **caractérisé en ce qu'**il comporte des moyens pour relever un paramètre représentatif d'une haute pression (HP) du fluide frigorigène en sortie du compresseur (1).

**5.** Dispositif selon la revendication 4, **caractérisé en ce qu'**il comporte un capteur de pression en sortie du compresseur pour relever la haute pression du fluide (HP).

**6.** Dispositif selon l'une des revendications 4 et 5, **caractérisé en ce que** le module de régulation (REG) est capable d'évaluer en outre, pour un débit d'air donné, une valeur en alimentation électrique du groupe moto-ventilateur, inférieure à ladite valeur maximale, en fonction d'une diminution de haute pression (HP) vers des valeurs de hautes pressions inférieures à ladite valeur prédéterminée (HPs),
et **en ce que** le module de régulation est agencé pour coopérer avec le module de commande en vue d'ajuster l'alimentation électrique du groupe moto-ventilateur, à une valeur (U) en correspondance avec une valeur de haute pression (HP), inférieure à ladite valeur prédéterminée.

**7.** Dispositif selon la revendication 6, **caractérisé en ce que** le module de régulation est agencé pour évaluer la correspondance entre la valeur en alimentation électrique du groupe moto-ventilateur et une valeur de haute pression inférieure à ladite valeur prédéterminée, selon un modèle choisi de variation sensiblement quadratique réciproque.

**8.** Dispositif selon l'une des revendications 6 et 7, **caractérisé en ce qu'**il comporte des moyens pour relever un paramètre représentatif d'une basse pression (BP) du fluide en entrée du compresseur, et **en ce que** le module de régulation est agencé en outre pour évaluer la correspondance de la valeur d'alimentation avec la diminution de la haute pression, en fonction de ladite basse pression du fluide.

**9.** Dispositif selon la revendication 8, **caractérisé en ce que** le compresseur est du type à contrôle externe et **en ce que** le module de régulation est propre à être relié à un capteur de courant électrique (i) d'alimentation du compresseur, ce courant électrique étant représentatif de la basse pression (BP) de fluide en entrée du compresseur.

**10.** Dispositif selon la revendication 9, **caractérisé en ce que** le compresseur est du type à contrôle interne et **en ce que** le module de régulation est propre à être relié à un capteur de température du flux d'air en sortie de l'évaporateur, cette température étant représentative de la basse pression de fluide en entrée du compresseur.

**11.** Dispositif selon l'une des revendications précédentes, **caractérisé en ce que** le groupe moto-ventilateur est alimenté électriquement en tension, et **en ce que** le module de régulation est agencé pour évaluer une tension d'alimentation maximale (Umax) du groupe moto-ventilateur, en fonction dudit débit d'air.

**Claims**

**1.** Motor vehicle interior air conditioning device, of the type comprising an air conditioning circuit wherein a refrigerant fluid passes and particularly comprising a compressor (1) and a condenser (2), said condenser (2) being intended to be passed through by an air flow (F) produced at least partly by engine blowers (5, 6) powered electrically via a control module (COM), means to record a representative parameter (Vext) of an air flow passing through the condenser, said air flow comprising the air flow produced by the engine blowers or not,
**characterised in that** it also comprises:

a regulation module (REG), suitable for cooperating with said means and capable of estimating a maximum engine blower electrical power supply value (Umax), for a given air flow and for a given cooling capacity of the air conditioning circuit which corresponds to a predetermined high pressure value (HPs) of the refrigerant fluid at the outlet of the compressor (1),
and **in that** the regulation module (REG) is arranged to cooperate with the control module (COM) to limit the electrical power supply of the engine blowers substantially to said maximum value, as a function of the air flow and the high pressure value (HP) at the outlet of the compressor (1).

**2.** Device according to claim 1, **characterised in that** the regulation module is suitable for being connected to a vehicle speed gauge, and **in that** the regulation module is suitable for accounting for the vehicle speed to evaluate said maximum engine blower electrical power supply value (Umax).

3. Device according to any of the above claims, **characterised in that** the regulation module is suitable for being connected to an anemometer gauge arranged to record an incident air velocity on the vehicle, proportional to the air flow passing through the condenser (2) and not produced by the engine blowers, and **in that** the regulation module is suitable for accounting for an incident wind on, the vehicle and/or a vehicle speed to evaluate said maximum engine blow electrical power supply value (Umax).

4. Device according to any of the above claims, **characterised in that** it comprises means to record a representative parameter of a high pressure (HP) of the refrigerant fluid at the outlet of the compressor (1).

5. Device according to claim 4, **characterised in that** it comprises a pressure gauge at the compressor outlet to record the high pressure of the fluid (HP).

6. Device according to any of claims 4 and 5, **characterised in that** the regulation module (REG) is also capable of evaluating, for a given air flow, an engine blower electrical power supply value, less than said maximum value, as a function of a decrease in high pressure (HP) to high pressure values less than said predetermined value (HPs), and **in that** the regulation module is arranged to cooperate with the control module with a view to adjusting the engine blower electrical power supply, to a value (U) corresponding to a high pressure value (HP), less than said predetermined value.

7. Device according to claim 6, **characterised in that** the regulation module is arranged to evaluate the correspondence between the engine blower electrical power supply value and a high pressure value less than said predetermined value, according to a selected substantially mutual squared variation model.

8. Device according to any of claims 6 and 7, **characterised in that** it comprises means to record a representative parameter of a low pressure (BP) of the fluid at the inlet of the compressor, and **in that** the regulation module is also arranged to evaluate the correspondence of the power supply value with the decrease in the high pressure, as a function of said low pressure of the fluid.

9. Device according to claim 8, **characterised in that** the compressor is of the external control type and **in that** the regulation module is suitable for being connected to an electrical power supply current gauge (i) of the compressor, said electrical current being representative of the low pressure (BP) of the fluid at the compressor inlet.

10. Device according to claim 9, **characterised in that** the compressor is of the internal control type and **in that** the regulation module is suitable for being connected to a temperature gauge of the air flow at the outlet of the evaporator, said temperature being representative of the low pressure of the fluid at the compressor inlet.

11. Device according to any of the above claims, **characterised in that** the engine blowers are supplied electrically with voltage, and **in that** the regulation module is arranged to evaluate a maximum power supply voltage (Umax) of the engine blowers, as a function of said air flow.

**Patentansprüche**

1. Klimasteuerungseinrichtung eines Fahrgastraums eines Kraftfahrzeugs, von der Art, die einen von einem Kältemittel durchströmten Klimakreislauf und insbesondere einen Verdichter (1), und einen Verflüssiger (2), wobei dieser verflüssiger (2) dazu bestimmt ist, von einem Luftstrom (F) durchquert zu werden, der zumindest zum Teil von einem Gebläsemotor (5, 6) erzeugt wird, der über ein Steuermodul (COM) elektrisch versorgt wird; und Mittel zum Erfassen eines Parameters (Vext) umfasst, der für einen den Verflüssiger durchquerenden Luftdurchsatz charakteristisch ist, wobei der besagte Luftdurchsatz den vom Gebläsemotor erzeugten Luftdurchsatz umfasst oder nicht, **dadurch gekennzeichnet, dass** sie darüber hinaus Folgendes aufweist: ein Regelungsmodul (REG), dazu bestimmt, mit den besagten Mitteln zusammenzuwirken und fähig, einen Maximalwert (Umax) der elektrischen Versorgung des Gebläsemotors abzuschätzen, für einen gegebenen Luftdurchsatz und für eine gegebene Kälteleistung des Klimakreislaufs, die einem vorausbestimmten Hochdruckwert (HPs) des Kältemittels am Austritt des Verdichters (1) entspricht, und dadurch, dass das Regelungsmodul (REG) angeordnet ist, um mit dem Steuermodul (COM) zusammenzuwirken, um die elektrische Versorgung des Gebläsemotors im Wesentlichen auf den besagten Maximalwert zu beschränken, in Abhängigkeit vom Luftdurchsatz und vom Hochdruckwert (HP) am Austritt des Verdichters (1).

2. Einrichtung nach Anspruch 1, **dadurch gekennzeichnet, dass** das Regelungsmodul dazu bestimmt ist, mit einem Fahrzeuggeschwindigkeitsfühler verbunden zu werden, und dadurch, dass das Regelungsmodul imstande ist, die Fahrzeuggeschwindigkeit mit einzubeziehen, um den besagten Maximalwert (Umax) der elektrischen Versorgung des Gebläsemotors zu ermitteln.

3. Einrichtung nach einem der vorhergehenden Ansprüche, **dadurch gekennzeichnet, dass** das Regelungsmodul dazu bestimmt ist, mit einem Anemometerfühler verbunden zu werden, der angeordnet ist, um eine auf dem Fahrzeug auftreffende Luftgeschwindigkeit festzustellen, die proportional zum Luftdurchsatz ist, der den Verflüssiger (2) durchquert und nicht vom Gebläsemotor erzeugt wird, und dadurch, dass das Regelungsmodul imstande ist, einen auf das Fahrzeug auftreffenden Wind und/oder eine Fahrzeuggeschwindigkeit mit einzubeziehen, um den besagten Maximalwert (Umax) der elektrischen Versorgung des Gebläsemotors zu ermitteln.

4. Einrichtung nach einem der vorhergehenden Ansprüche, **dadurch gekennzeichnet, dass** sie Mittel umfasst, um einen Parameter zu erheben, der für einen Hochdruck (HP) des Kältemittels am Austritt des Verdichters (1) charakteristisch ist.

5. Einrichtung nach Anspruch 4, **dadurch gekennzeichnet, dass** sie einen Druckfühler am Austritt des Verdichters umfasst, um den Hochdruck des Mittels (HP) zu erheben.

6. Einrichtung nach einem der Ansprüche 4 und 5, **dadurch gekennzeichnet, dass** das Regelungsmodul (REG) fähig ist, zusätzlich, für einen gegebenen Luftdurchsatz, einen Wert der elektrischen Versorgung des Gebläsemotors zu ermitteln, der niedriger als der besagte Maximalwert ist, in Abhängigkeit von einer Hochdruckverringerung (HP) auf Hochdruckwerte, die niedriger als der besagte vorausbestimmte Wert (HPs) sind, und dadurch, dass das Regelungsmodul angeordnet ist, um mit dem Steuermodul zusammenzuwirken, damit die elektrische Versorgung des Gebläsemotors einem Wert (U) in Übereinstimmung mit einem Hochdruckwert (HP), der niedriger als der besagte vorausbestimmte Wert ist, angepasst werden kann.

7. Einrichtung nach Anspruch 6, **dadurch gekennzeichnet, dass** das Regelungsmodul angeordnet ist, um die Übereinstimmung zwischen dem Wert der elektrischen Versorgung des Gebläsemotors und einem Hochdruckwert, der niedriger als der besagte vorausbestimmte Wert ist, gemäß einem gewählten Modell einer im Wesentlichen quadratischen reziproken Variation, zu ermitteln.

8. Einrichtung nach einem der Ansprüche 6 und 7, **dadurch gekennzeichnet, dass** sie Mittel umfasst, um einen Parameter zu erheben, der für einen Niederdruck (BP) des Kältemittels am Eintritt des Verdichters charakteristisch ist, und dadurch, dass das Regelungsmodul darüber hinaus angeordnet ist, um die Übereinstimmung des Versorgungswerts mit der Hochdruckverringerung in Abhängigkeit vom besagten Niederdruck des Mittels zu ermitteln.

9. Einrichtung nach Anspruch 8, **dadurch gekennzeichnet, dass** der Verdichter von der Art mit externer Kontrolle ist und dadurch, dass das Regelungsmodul dazu bestimmt ist, mit einem Fühler für die elektrische Stromversorgung (i) des Verdichters verbunden zu werden, wobei dieser elektrische Strom für den Niederdruck (BP) des Mittels am Eintritt des Verdichters charakteristisch ist.

10. Einrichtung nach Anspruch 9, **dadurch gekennzeichnet, dass** der Verdichter von der Art mit internen Kontrolle ist und dadurch, dass das Regelungsmodul dazu bestimmt ist, mit einem Temperaturfühler des Luftstroms am Austritt des Verdampfers verbunden zu werden, wobei diese Temperatur für den Niederdruck des Mittels am Eintritt des Verdichters charakteristisch ist.

11. Einrichtung nach einem der vorhergehenden Ansprüche, **dadurch gekennzeichnet, dass** der Gebläsemotor elektrisch mit Spannung versorgt wird, und dadurch, dass das Regelungsmodul angeordnet ist, um eine maximale Versorgungsspannung (Umax) des Gebläsemotors in Abhängigkeit vom besagten Luftdurchsatz zu ermitteln.

FIG.1

FIG.2

FIG.3

FIG.4

FIG.5